(19) Europäisches Patentamt
European Patent Office
Office européen des brevets

(11) **EP 4 151 488 A2**

(12) **EUROPEAN PATENT APPLICATION**

(43) Date of publication:
**22.03.2023 Bulletin 2023/12**

(21) Application number: **22216586.2**

(22) Date of filing: **23.12.2022**

(51) International Patent Classification (IPC):
**B60W 30/18** (2006.01)  **B60W 60/00** (2020.01)
**B60W 30/095** (2012.01)

(52) Cooperative Patent Classification (CPC):
**B60W 30/18163; B60W 30/0956; B60W 60/0011**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2021 CN 202111647041**

(71) Applicant: **Apollo Intelligent Connectivity (Beijing) Technology Co., Ltd.**
**Beijing 100176 (CN)**

(72) Inventors:
• **PAN, An**
  **Beijing, 100176 (CN)**
• **YU, Ning**
  **Beijing, 100176 (CN)**
• **XIONG, Hao**
  **Beijing, 100176 (CN)**
• **FENG, Zhiqi**
  **Beijing, 100176 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS OF DETERMINING TRAVELING TRAJECTORY OF VEHICLE, ELECTRONIC DEVICE, STORAGE MEDIUM AND PROGRAM PRODUCT**

(57) A method and an apparatus of determining a traveling trajectory of a vehicle, an electronic device, a storage medium and a program product, which relate to a field of an automatic driving technology, and in particular to a field of a high-definition mapping technology. The method includes: determining, in response to a signal that a paddle is toggled being received, at least one paddle-triggered candidate traveling trajectory from a plurality of predetermined traveling trajectories based on the signal that the paddle is toggled, wherein the signal that the paddle is toggled is configured to indicate that the vehicle is in a lane-to-be-changed state, and the paddle-triggered candidate traveling trajectory includes a predetermined traveling trajectory for the vehicle to change a lane; determining at least one paddle-triggered traveling trajectory cost value corresponding to the at least one paddle-triggered candidate traveling trajectory one by one; and determining a paddle-triggered target traveling trajectory from the at least one paddle-triggered candidate traveling trajectory based on the at least one paddle-triggered traveling trajectory cost value, so that the vehicle travels according to the paddle-triggered target traveling trajectory.

In response to a signal that a paddle is toggled being received, at least one paddle-triggered candidate traveling trajectory is determined from a plurality of predetermined traveling trajectories based on the signal that the paddle is toggled, where the signal that the paddle is toggled is used to indicate that the vehicle is in a lane-to-be-changed state, and the paddle-triggered candidate traveling trajectory includes a predetermined traveling trajectory for the vehicle to change a lane —S210

At least one paddle-triggered traveling trajectory cost value corresponding to the at least one paddle-triggered candidate traveling trajectory one by one is determined —S220

A paddle-triggered target traveling trajectory is determined from the at least one paddle-triggered candidate traveling trajectory based on the at least one paddle-triggered traveling trajectory cost value, so that the vehicle travels according to the paddle-triggered target traveling trajectory —S230

FIG. 2

**Description**

TECHNICAL FIELD

The present disclosure relates to a field of an automatic driving technology, in particular to a field of a high-definition map technology, and more specifically, to a method and an apparatus of determining a traveling trajectory of a vehicle, an electronic device, a storage medium, and a program product.

BACKGROUND

An autonomous vehicle is a vehicle that may automatically perceive a surrounding environment and make a traveling decision and control based on a perceived result. When the autonomous vehicle travels, a high-definition map plays an important role for the autonomous vehicle to make the traveling decision and control according to the perceived result. The high-definition map, which is also known as an HD map, has a precious vehicle location information and a rich road element data information, which may help the autonomous vehicle predict a complex road information, such as slope, curvature, heading, etc., so as to better avoid a potential risk.

SUMMARY

The present disclosure provides a method and an apparatus of determining a traveling trajectory of a vehicle, an electronic device, a storage medium, and a program product.

According to an aspect of the present disclosure, a method of determining a traveling trajectory of a vehicle is provided, and the method includes: determining, in response to a signal that a paddle is toggled being received, at least one paddle-triggered candidate traveling trajectory from a plurality of predetermined traveling trajectories based on the signal that the paddle is toggled, where the signal that the paddle is toggled is configured to indicate that the vehicle is in a lane-to-be-changed state, and the paddle-triggered candidate traveling trajectory includes a predetermined traveling trajectory for the vehicle to change a lane; determining at least one paddle-triggered traveling trajectory cost value corresponding to the at least one paddle-triggered candidate traveling trajectory one by one; and determining, from the at least one paddle-triggered candidate traveling trajectory, a paddle-triggered target traveling trajectory based on the at least one paddle-triggered traveling trajectory cost value, so that the vehicle travels according to the paddle-triggered target traveling trajectory.

According to another aspect of the present disclosure, an apparatus of determining a traveling trajectory of a vehicle is provided, and the apparatus includes: a paddle screening module configured to determine, in response to a signal that a paddle is toggled being received, at least one paddle-triggered candidate traveling trajectory from a plurality of predetermined traveling trajectories based on the signal that the paddle is toggled, where the signal that the paddle is toggled is configured to indicate that the vehicle is in a lane-to-be-changed state, and the paddle-triggered candidate traveling trajectory includes a predetermined traveling trajectory for the vehicle to change a lane; a paddle cost value determination module configured to determine at least one paddle-triggered traveling trajectory cost value corresponding to the at least one paddle-triggered candidate traveling trajectory one by one; and a paddle trajectory determination module configured to determine, from the at least one paddle-triggered candidate traveling trajectory, a paddle-triggered target traveling trajectory based on the at least one paddle-triggered traveling trajectory cost value, so that the vehicle travels according to the paddle-triggered target traveling trajectory.

According to another aspect of the present disclosure, an electronic device is provided, including: at least one processor; and a memory communicatively connected to the at least one processor, wherein the memory stores instructions executable by the at least one processor, and the instructions, when executed by the at least one processor, are configured to cause the at least one processor to implement the method as described in the present disclosure.

According to another aspect of the present disclosure, a non-transitory computer-readable storage medium having computer instructions therein is provided, and the computer instructions are configured to cause a computer system to implement the method as described in the present disclosure.

According to another aspect of the present disclosure, a computer program product containing a computer program is provided, and the computer program, when executed by a processor, is configured to cause the processor to implement the method as described in the present disclosure.

According to another aspect of the present disclosure, a vehicle including the electronic device as described in the present disclosure is provided.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

The accompanying drawings are used for better understanding of the solution and do not constitute a limitation to the present disclosure, wherein:

FIG. 1A schematically shows an exemplary system architecture in which a method and an apparatus of determining a traveling trajectory of a vehicle may be applied according to an embodiment of the present disclosure;

FIG. 1B schematically shows a schematic diagram of a module structure of a vehicle according to an embodiment of the present disclosure;

FIG. 2 schematically shows a flowchart of a method of determining a traveling trajectory of a vehicle according to an embodiment of the present disclosure;

FIG. 3 schematically shows a flowchart of a method of determining a traveling trajectory of a vehicle according to another embodiment of the present disclosure;

FIG. 4 schematically shows a flowchart of determining a paddle-triggered candidate traveling trajectory according to another embodiment of the present disclosure;

FIG. 5 schematically shows a block diagram of an apparatus of determining a traveling trajectory of a vehicle according to an embodiment of the present disclosure; and

FIG. 6 schematically shows a block diagram of an electronic device suitable for implementing a method of determining a traveling trajectory of a vehicle according to an embodiment of the present disclosure.

DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The present disclosure provides a method and an apparatus of determining a traveling trajectory of a vehicle, a vehicle, an electronic device, a storage medium, and a program product.

According to embodiments of the present disclosure, a method of determining a traveling trajectory of a vehicle is provided, and the method may include: determining, in response to a signal that a paddle is toggled being received, at least one paddle-triggered candidate traveling trajectory from a plurality of predetermined traveling trajectories based on the signal that the paddle is toggled, where the signal that the paddle is toggled is used to indicate that the vehicle is in a lane-to-be-changed state, and the paddle-triggered candidate traveling trajectory includes a predetermined traveling trajectory for the vehicle to change a lane; determining at least one paddle-triggered traveling trajectory cost value corresponding to the at least one paddle-triggered candidate traveling trajectory one by one; and determining, from the at least one paddle-triggered candidate traveling trajectory, a paddle-triggered target traveling trajectory based on the at least one paddle-triggered traveling trajectory cost value, so that the vehicle travels according to the paddle-triggered target traveling trajectory.

In the technical solution of the present disclosure, a collection, a storage, a use, a processing, a transmission, a provision and a disclosure of the obstacle information, the traveling speed information and the road information involved comply with provisions of relevant laws and regulations, and do not violate public order and good custom.

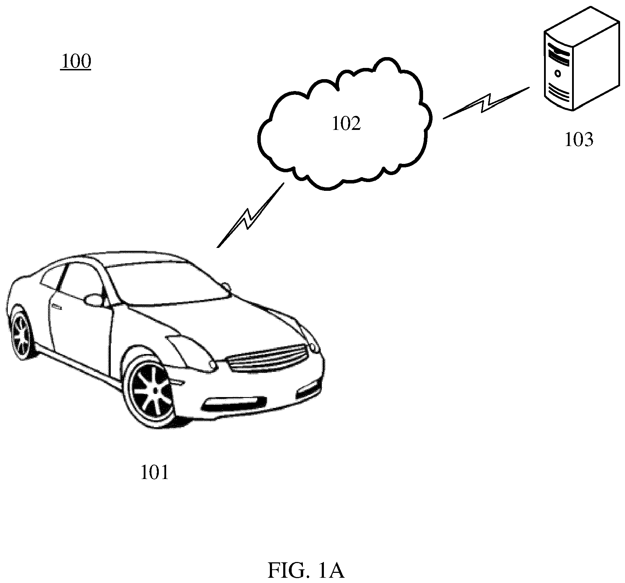

FIG. 1A schematically shows an exemplary system architecture in which a method and an apparatus of determining a traveling trajectory of a vehicle may be applied according to an embodiment of the present disclosure.

It should be noted that FIG. 1A only shows an example in which a system architecture according to embodiments of the present disclosure may be applied, so as to help those skilled in the art understand the technical contents of the present disclosure, but it does not mean that embodiments of the present disclosure may not be applied to other devices, systems, environments or scenarios.

As shown in FIG. 1A, a system architecture 100 according to the embodiment may include a vehicle 101, a network 102 and a server 103. The network 102 is used to provide a medium of a communication link between the vehicle 101 and the server 103. The network 102 may include various connection types, such as a wireless communication link.

The vehicle 101 may be equipped with a camera acquisition apparatus, for example, image data for a road may be acquired through the camera acquisition apparatus. The vehicle 101 may also be equipped with a laser sensor, for example, point cloud data for the road may be acquired through the laser sensor. The vehicle 101 may also be equipped with a positioning system, for example, a current geographic location information of the vehicle 101 may be determined in real time through the positioning system.

The vehicle 101 may be used by a user to interact with the server 103 through the network 102, so as to receive or send operational data, such as point cloud data, image data, geographic location information, etc.

The server 103 may be a server that provides various services, such as a background management server (for example only) that provides a support for a navigation application used by the user with the vehicle 101.

The server 103 may also be a cloud server, which is also known as a cloud computing server or cloud host, and may be a host product in a cloud computing service system, so as to solve problems of a difficult management and a weak business scalability in an existing physical host and a VPS service ("Virtual Private Server", or "VPS" for short). The server may also be a server of a distributed system, or a server combined with a block-chain.

It should be noted that the method of determining a traveling trajectory of a vehicle provided in embodiments of the present disclosure may be generally performed by the vehicle 101. Accordingly, the apparatus of determining a traveling trajectory of a vehicle provided in embodiments of the present disclosure may also be provided in the vehicle 101.

Alternatively, the method of determining a traveling trajectory of a vehicle provided in embodiments of the present disclosure may be generally performed by the server 103. Accordingly, the apparatus of determining a traveling trajectory of a vehicle provided in embodiments of the present disclosure may also be generally provided in the server 103.

It should be understood that the number of vehicle, network and server shown in FIG. 1A is only schematic. According to implementation needs, any number of terminal devices, networks and servers may be provided.

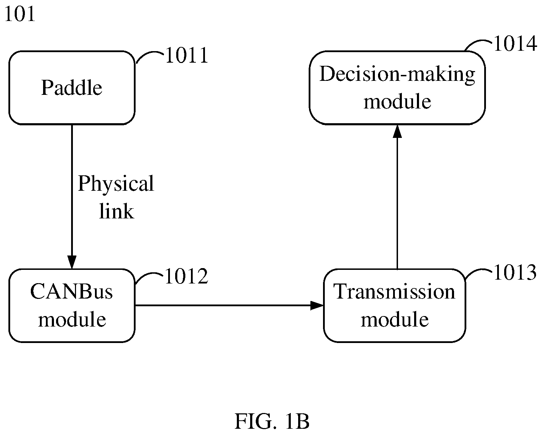

FIG. 1B schematically shows a schematic diagram of a module structure of a vehicle according to an embodiment of the present disclosure.

As shown in FIG. 1B, the vehicle 101 may include a paddle 1011, a CANBus (ControLLer Area Net-work Bus) module 1012, a transmission module 1013, and a decision-making module 1014. Interactions between the above modules and functions of the modules will be described below.

The paddle 1011 may refer to a physical paddle or steering paddle mounted in the vehicle. When the paddle is toggled inward, a left turn signal lamp lights up. When the paddle is toggled outward, a right turn signal lamp lights up.

According to embodiments of the present disclosure, when the paddle is toggled by a security officer sitting in the vehicle, that is, when the toggle is triggered manually, for example, the signal that the paddle is toggled may be sent to the CANBus module 1012 synchronously through a physical link, so as to identify a current state of the paddle.

The CANBus module 1012 is a core module of a data torsion, and is used to monitor and record the current state of the paddle. It is also possible to broadcast a parameter of the current state of the paddle through the transmission module 1013, such as a global parameter service of a Cybertron (controller). The current state of the paddle may refer to a state in which the paddle is toggled or a state in which the paddle is returned.

The transmission module 1013 may achieve both an intra-process communication and an inter-process communication of lightweight data.

The decision-making module 1014 is used to receive a signal that indicates the current state of the paddle from the transmission module 1013. After parsing the signal, an internal decision logic may be triggered to generate, for example, a task for changing a lane, and a planning for changing a lane may be implemented after determining that the task is safe and valid.

With the vehicle provided in embodiments of the present disclosure, the paddle, the CANBus module, the transmission module, the decision-making module and other modules may be used to combine a manually triggered signal indicating that the paddle is toggled to achieve a signal communication and a reasonable decision-making in a trapped traffic scene, so as to improve an efficiency and a rationality of vehicle extrication.

It should be noted that the sequence number of each operation in the following method is only used as a representation of the operation for the ease of description, and should not be regarded as an execution order of each operation. Unless explicitly indicated, the method does not need to be performed exactly in the order shown.

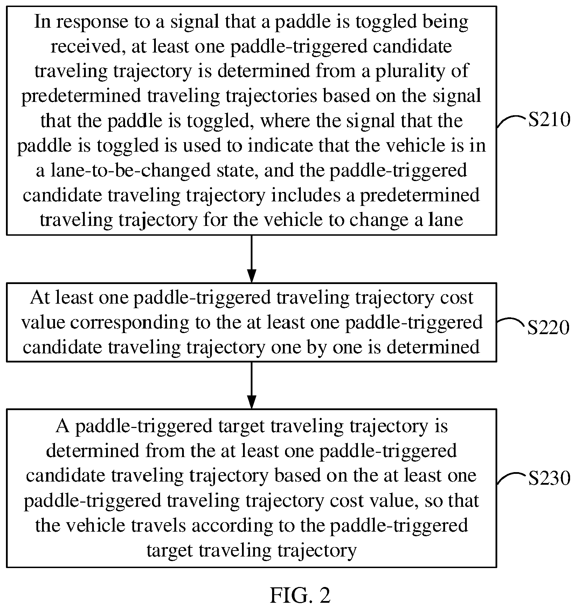

FIG. 2 schematically shows a flowchart of a method of determining a traveling trajectory of a vehicle according to an embodiment of the present disclosure.

As shown in FIG. 2, the method includes operations S210 to S230.

In operation S210, in response to a signal that a paddle is toggled being received, at least one paddle-triggered candidate traveling trajectory is determined from a plurality of predetermined traveling trajectories based on the signal that the paddle is toggled, where the signal that the paddle is toggled is used to indicate that the vehicle is in a lane-to-be-changed state, and the paddle-triggered candidate traveling trajectory includes a predetermined traveling trajectory for the vehicle to change a lane.

In operation S220, at least one paddle-triggered traveling trajectory cost value corresponding to the at least one paddle-triggered candidate traveling trajectory one by one is determined.

In operation S230, a paddle-triggered target traveling trajectory is determined from the at least one paddle-triggered candidate traveling trajectory based on the at least one paddle-triggered traveling trajectory cost value, so that the vehicle travels according to the paddle-triggered target traveling trajectory.

According to embodiments of the present disclosure, the signal that the paddle is toggled may refer to the left turn signal lamp lights up when a physical paddle or steering paddle mounted in the vehicle, such as in an autonomous vehicle, is toggled inward, and the right turn signal lamp lights up when the paddle is toggled outward.

According to embodiments of the present disclosure, during the traveling of the vehicle, if there is an intention to change a lane, the paddle is manually toggled to turn on a steering lamp, which may provide an indication that the lane is about to change. A safety officer who assists in a safe traveling of the vehicle on the vehicle may manually toggle the paddle after making a lane change decision based on an actual traffic scene.

Different from making a relevant decision relying on a lane-changing model or making a relevant decision relying on a rule, based on the actual traffic scene, manually triggering to determine a predetermined traveling trajectory for the vehicle to change a lane as the paddle-triggered candidate traveling trajectory for a subsequent decision on whether to change a lane may better improve a determination ability and a rationality of dealing with complex traffic scene.

According to embodiments of the present disclosure, after receiving the signal that the paddle is toggled indicating that the vehicle is in a lane-to-be-changed state, the at least one paddle-triggered candidate traveling trajectory may be determined from the predetermined traveling trajectory based on the signal that the paddle is toggled. The predetermined traveling trajectory may refer to at least one of: a predetermined traveling trajectory for maintaining a lane, a predetermined traveling trajectory for the vehicle to change a lane, or a predetermined traveling trajectory for bypassing an obstacle. The at least one paddle-triggered candidate traveling trajectory may refer to one or two of: a predetermined traveling trajectory for maintaining a lane, a predetermined traveling trajectory for the vehicle to change a lane, or a predetermined traveling trajectory for bypassing an obstacle. However, the present disclosure is not limited to this. The at least one paddle-triggered candidate traveling trajectory may also be all of the predetermined traveling trajectories.

According to embodiments of the present disclosure, the paddle-triggered traveling trajectory cost value may be determined for the paddle-triggered candidate traveling trajectory, and the paddle-triggered target traveling trajectory may be determined based on the at least one paddle-triggered traveling trajectory cost value corresponding to the at least one paddle-triggered candidate traveling trajectory one by one. The paddle-triggered target traveling trajectory may be determined by comparing based on the paddle-triggered traveling trajectory cost value, which may be more comprehensive and effective.

According to the method of determining the traveling trajectory of the vehicle provided in embodiments of the present disclosure, during an automatic driving, when in a trapped traffic scene, the signal that the paddle is toggled may be used as a triggering condition for determining the paddle-triggered candidate traveling trajectory and determining the paddle-triggered traveling trajectory cost value, so as to combine the planning of the vehicle's traveling trajectory with the manual decision-making based on the actual situation, and through multiple planning, it may be determined whether to execute the driving behavior of the vehicle to get out of trouble according to the predetermined traveling trajectory for the vehicle to change a lane. In this way, the effectiveness and operational efficiency of the vehicle in getting out of trouble in the actual complex traffic scene may be improved.

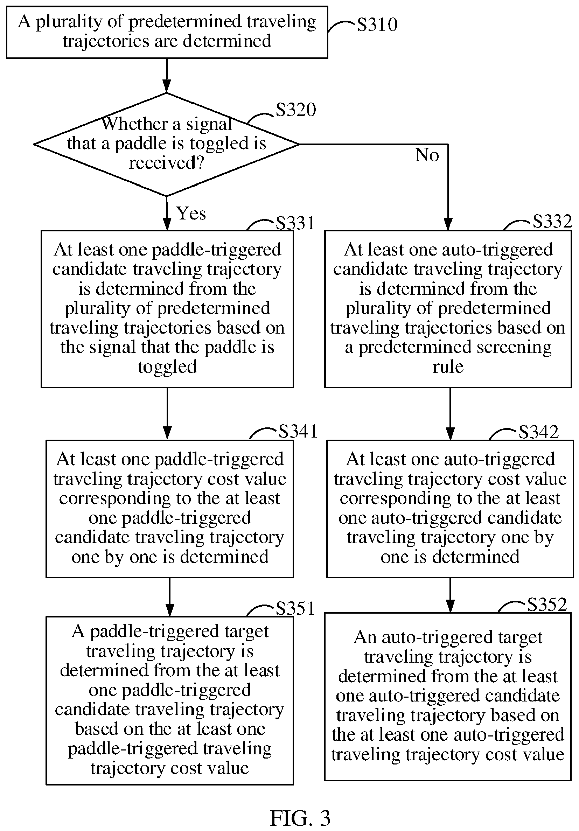

FIG. 3 schematically shows a flowchart of a method of determining a traveling trajectory of a vehicle according to another embodiment of the present disclosure.

As shown in FIG. 3, the method includes operations S310, S320, S331, S332, S341, S342, S351 and S352.

In operation S310, a plurality of predetermined traveling trajectories are determined.

According to embodiments of the present disclosure, when the vehicle travels automatically, the plurality of predetermined traveling trajectories may be determined depending on a road topology acquired from a high-definition map. Predetermined traveling trajectories of all accessible roads may be processed as a plurality of tasks. The plurality of tasks may be a plurality of threads, and may be processed in parallel.

In operation S320, it may be determined whether a signal that a paddle is toggled is received or not.

In operation S331, in response to the signal that the paddle is toggled being received, at least one paddle-triggered candidate traveling trajectory is determined from the plurality of predetermined traveling trajectories based on the signal that the paddle is toggled.

In operation S332, in response to the signal that the paddle is toggled being not received, at least one auto-triggered candidate traveling trajectory is determined from the plurality of predetermined traveling trajectories based on a predetermined screening rule.

According to embodiments of the present disclosure, planning tasks of the plurality of predetermined traveling trajectories may be performed in real time, for example, the at least one auto-triggered candidate traveling trajectory may be determined from the plurality of predetermined traveling trajectories in real time. However, the present disclosure is not limited to this. The planning tasks of the plurality of predetermined traveling trajectories may also be performed at a predetermined time interval, such as 1 second, 10 seconds, or 1 minute.

In operation S341, at least one paddle-triggered traveling trajectory cost value corresponding to the at least one paddle-triggered candidate traveling trajectory one by one is determined.

In operation S351, a paddle-triggered target traveling trajectory is determined from the at least one paddle-triggered candidate traveling trajectory based on the at least one paddle-triggered traveling trajectory cost value, so that the vehicle travels according to the paddle-triggered target traveling trajectory.

In operation S342, at least one auto-triggered traveling trajectory cost value corresponding to the at least one auto-triggered candidate traveling trajectory one by one is determined.

In operation S352, an auto-triggered target traveling trajectory is determined from the at least one auto-triggered traveling trajectory based on the at least one auto-triggered traveling trajectory cost value, so that the vehicle travels according to the auto-triggered target traveling trajectory.

For example, during an automatic driving of a vehicle, when the vehicle travels according to the traveling trajectory for maintaining a lane, the auto-triggered target traveling trajectory may be determined based on the at least one auto-triggered traveling trajectory cost value, and a driving operation may be performed according to the auto-triggered target traveling trajectory. However, once the signal that the paddle is toggled is received, in response to the signal that the paddle is toggled being received, a determination of the auto-triggered candidate traveling trajectory based on the predetermined screening rule may be changed to be a determination of the paddle-triggered candidate traveling trajectory based on the signal that the paddle is toggled, and a determination of the paddle-triggered target traveling trajectory based on the paddle-triggered traveling trajectory cost value of the paddle-triggered candidate traveling trajectory. Then, a predetermined traveling trajectory of the vehicle going straight may be switched to a predetermined traveling trajectory for the vehicle changing a lane, and the vehicle may subsequently perform the driving operation according to the predetermined traveling trajectory for the vehicle to change a lane.

According to embodiments of the present disclosure, for each of the plurality of tasks, a traveling trajectory cost value of a predetermined traveling trajectory corresponding to the task may be directly calculated without performing a screening operation, so as to obtain a plurality of traveling trajectory cost values, and a target traveling trajectory may be determined based on the plurality of traveling trajectory cost values. However, the present disclosure is not limited to this. The auto-triggered candidate traveling trajectory may also be determined from the plurality of predetermined traveling trajectories based on only the predetermined screening rule. A pruning processing, i.e., a screening processing, is performed on the predetermined traveling trajectory through the predetermined screening rule, so that an unreasonable task is removed, and a desired task is retained for a subsequent processing. Therefore, a subsequent processing of the unreasonable task may be avoided, and a processing capacity of the traveling trajectory cost value may be reduced, thereby improving a processing speed.

According to other embodiments of the present disclosure, in response to the signal that the paddle is toggled being not received, the auto-triggered candidate traveling trajectory may also be determined from the plurality of predetermined traveling trajectories based on the predetermined screening rule, and then the auto-triggered target traveling trajectory may be determined. In response to the signal that the paddle is toggled being received, the paddle-triggered candidate traveling trajectory may be determined from the plurality of predetermined traveling trajectories based on the signal that the paddle is toggled, and then the paddle-triggered target traveling trajectory may be determined. In this way, without a manual control, a traveling trajectory may be planned in a form of automatic triggering, so as to achieve automatic driving. When facing a complex real-time traffic scene, such as a traffic control, an accident vehicle on a road, a temporary road construction, and a non-automatic vehicle occupying a wrong road, etc., the traveling trajectory may be planned in a form of paddle triggering, such as triggered by a manual signal that the paddle is toggled, so that the determined traveling trajectory may be more diversified and flexible.

According to embodiments of the present disclosure, the predetermined screening rule may refer to a screening rule based on a model result. A model result of a traveling trajectory planning on whether a lane change is required may be determined by designing a screening model. An input of the screening model may be one or more of a traveling speed information of a vehicle; an obstacle information within a predetermined range, such as a state information of a dynamic obstacle or a state information of a static obstacle; a road information; and/or a high-definition map information, such as road network structure data. An output of the screening model may be a result of whether to change a lane, such as a result of not changing a lane, a result of changing a lane to the left, or a result of changing a lane to the right. The screening model may use a network architecture of a decision tree, such as an XGBoost (eXtreme Gradient Boosting) model. However, the present disclosure is not limited to this. The screening model may also be a network model obtained by cascading a plurality of LSTMs (Long Short-Term Memories).

According to embodiments of the present disclosure, the predetermined screening rule may refer to: based on the model result, a predetermined traveling trajectory that contradicts a decision of the model result is deleted, and it may be determined, from the plurality of predetermined traveling trajectories, a predetermined traveling trajectory other than the predetermined traveling trajectory that contradicts the decision of the model result as an auto-triggered candidate traveling trajectory. For example, the auto-triggered candidate traveling trajectory may be the predetermined traveling trajectory for maintaining a lane and the predetermined traveling trajectory for bypassing an obstacle.

According to embodiments of the present disclosure, the predetermined traveling trajectory for maintaining a lane may include a predetermined traveling trajectory for maintaining a left lane or a predetermined traveling trajectory for maintaining a right lane.

According to embodiments of the present disclosure, the predetermined traveling trajectory for bypassing an obstacle may include a predetermined traveling trajectory of a vehicle bypassing an obstacle to the left or a predetermined traveling trajectory of a vehicle bypassing an obstacle to the right.

According to embodiments of the present disclosure, the auto-triggered traveling trajectory cost value may be determined based on the obstacle information, the traveling speed information and the road information.

According to embodiments of the present disclosure, the auto-triggered traveling trajectory cost value may include at least one selected from: an original trajectory cost value, a bypass cost value, a collision cost value, a cross-solid-line cost value, a cross-multi-lane cost value, or a model cost value.

According to embodiments of the present disclosure, the auto-triggered traveling trajectory cost value Cost_ Auto may be as expressed in equation (1):

$$\text{Cost\_ Auto} = Cost_{Ref} + Cost_{Collision} + Cost_{Nudge} + Cost_{SolidLane} + Cost_{MultiLane} + Cost_{Model} \ (1),$$

where, $Cost_{Ref}$ represents a cost value for maintaining a lane, that is, a cost value of an original trajectory, $Cost_{Collision}$ represents a cost value of a risk that a vehicle may collide with a static obstacle, that is, the bypass cost value, $Cost_{Nudge}$ represents a cost value of a risk that a vehicle may collide with a dynamic obstacle, that is, the collision cost value, $Cost_{SolidLane}$ represents a cross-solid-line cost value, and $Cost_{MultiLane}$ represents a cross-multi-lane cost value, $Cost_{Model}$ represents a model cost value, where

$$\text{Cost}_{\text{Nudge}} = \begin{cases} 2000, & \text{a risk exists} \\ 0, & \text{no risk exists} \end{cases};$$

$$\text{Cost}_{\text{Collision}} = \begin{cases} 2000, & \text{a risk exists} \\ 0, & \text{no risk exists} \end{cases};$$

$$Cost_{MultiLane} = \begin{cases} 2000, & \text{a reference line intersects a plurality of lane lines} \\ 0, & \text{a reference line does not intersect a plurality of lane lines} \end{cases};$$

$$Cost_{Model} = \begin{cases} 500, & \text{does not match a model result} \\ 0, & \text{match a model result} \end{cases}.$$

A cost value of 500 may be added for a predetermined traveling trajectory that does not match the model result. A predetermined traveling trajectory that matches the model result may not be processed. For example, if the model result indicates the predetermined traveling trajectory for maintaining a right lane, the cost value of 500 may be added to the cost value of the predetermined traveling trajectory for maintaining a left lane, the cost value of 500 may be added to the predetermined traveling trajectory of the vehicle bypassing an obstacle to the left, and the cost value of 500 may be added to the predetermined traveling trajectory of the vehicle bypassing an obstacle to the right.

$$Cost_{SolidLane} = \begin{cases} 2000, & \text{a reference line intersects a solid line} \\ 0, & \text{a reference line does not intersect a solid line} \end{cases};$$

$$Cost_{Ref} = \min\left\{Cost_{\text{threshold}}, \left[L_{\text{threshold}} \middle/ min\left(L_{\text{threshold}}, (\text{fabs}(L_{\text{Real time}}) + 1)\right)\right]\right\},$$

where $Cost_{\text{threshold}}$ represents a preset cost threshold, such as 20. $L_{\text{threshold}}$ represents a preset distance threshold, such as 400. $L_{\text{Real time}}$ represents the distance between a current location and an end location. fabs($L_{\text{Real time}}$) represents the absolute value.

According to embodiments of the present disclosure, the plurality of auto-triggered traveling trajectory cost values may be sorted in a descending order, and an auto-triggered traveling trajectory cost value ranked at the bottom may be used as an auto-triggered target traveling trajectory cost value, that is, the minimum auto-triggered traveling trajectory cost value may be used as the auto-triggered target traveling trajectory cost value. The auto-triggered traveling trajectory corresponding to the auto-triggered target traveling trajectory cost value is used as an auto-triggered target traveling trajectory. However, the present disclosure is not limited to this. The plurality of auto-triggered traveling trajectory cost values may also be configured with weights, and the minimum one of the plurality of weight-configured auto-triggered traveling trajectory cost values is determined as the auto-triggered target traveling trajectory cost value by comparing the plurality of weight-configured auto-triggered traveling trajectory cost values.

According to embodiments of the present disclosure, in combination with multiple factors such as a model result, a risk of colliding with a dynamic obstacle, a risk of colliding with a static obstacle, an intersection with a plurality of lane lines, an intersection with a solid line, etc., it may be ensured that an optimal predetermined traveling trajectory may be obtained by using a refined cost value calculation function with fully consideration of a driving safety and a limitation of traffic law and regulation, so that a rationality and a safety of the automatic driving may be ensured.

According to embodiments of the present disclosure, in response to the signal that the paddle is toggled being received, based on the signal that the paddle is toggled, the predetermined traveling trajectory for the vehicle to change a lane and the predetermined traveling trajectory for maintaining a lane may be determined from the plurality of predetermined traveling trajectories, as a plurality of paddle-triggered candidate traveling trajectories.

According to embodiments of the present disclosure, the predetermined traveling trajectory for the vehicle to change a lane may include a predetermined traveling trajectory of a vehicle changing a lane to the left or a predetermined traveling trajectory of a vehicle changing a lane to the right.

According to embodiments of the present disclosure, based on the signal that the paddle is toggled, the predetermined traveling trajectory for bypassing an obstacle may be pruned from the plurality of predetermined traveling trajectories, and the predetermined traveling trajectory for the vehicle to change a lane and the predetermined traveling trajectory for maintaining a lane may be reserved as the plurality of paddle-triggered candidate traveling trajectories. However, the present disclosure is not limited to this. A direction of toggling the paddle may be analyzed based on the signal that the paddle is toggled. For example, if the paddle is toggled inward, there may be an intention of changing a lane to the left. When a signal that the paddle is toggled inward is received, the predetermined traveling trajectory of the vehicle changing a lane to the right is pruned, and the predetermined traveling trajectory of the vehicle changing a lane to the left and the predetermined traveling trajectory for maintaining a lane are reserved as the plurality of paddle-triggered candidate traveling trajectories. On the contrary, when a signal that the paddle is toggled outward is received, the predetermined traveling trajectory of the vehicle changing a lane to the left is pruned, and the predetermined traveling trajectory of the vehicle changing a lane to the right and the predetermined traveling trajectory for maintaining a lane are reserved as the plurality of paddle-triggered candidate traveling trajectories.

According to embodiments of the present disclosure, the paddle-triggered traveling trajectory cost value may be determined based on an obstacle information. The obstacle information may include a dynamic obstacle information and a static obstacle information.

According to embodiments of the present disclosure, the paddle-triggered traveling trajectory cost value includes the collision cost value and/or the bypass cost value.

According to embodiments of the present disclosure, the paddle-triggered traveling trajectory cost value Cost_Paddle may be as expressed in equation (2):

$$\text{Cost\_Paddle} = Cost_{Collision} + Cost_{Nudge}; (2)$$

where $Cost_{Collision}$ represents a cost value of a risk that a vehicle may collide with a static obstacle, that is, the bypass cost value, and $Cost_{Nudge}$ represents a cost value of a risk that a vehicle may collide with a dynamic obstacle, that is, the collision cost value.

According to embodiments of the present disclosure, the plurality of paddle-triggered traveling trajectory cost values may be sorted in a descending order, and the paddle-triggered traveling trajectory cost value ranked at the bottom may be used as a paddle-triggered target traveling trajectory cost value, that is, the minimum paddle-triggered traveling trajectory cost value may be used as the paddle-triggered target traveling trajectory cost value. The paddle-triggered traveling trajectory corresponding to the paddle-triggered target traveling trajectory cost value is used as a paddle-triggered target traveling trajectory. However, the present disclosure is not limited to this. The plurality of paddle-triggered traveling trajectory cost values may also be configured with weights, and the minimum one of the plurality of weight-configured paddle-triggered traveling trajectory cost values is determined as the paddle-triggered target traveling trajectory cost value by comparing the plurality of weight-configured paddle-triggered traveling trajectory cost values.

According to embodiments of the present disclosure, in response to a manually triggered signal that the paddle is toggled being received, on a premise of ensuring a basic safety, based on a criterion that using the paddle-triggered traveling trajectory cost value to plan the traveling trajectory, a desired response in line with the signal that the paddle is toggled may be made, so that the vehicle may more easily determine a driving behavior of changing a lane. An intelligence and a flexibility consistent with a manual driving may be achieved in a trapped traffic scene, so as to avoid a vehicle stagnation.

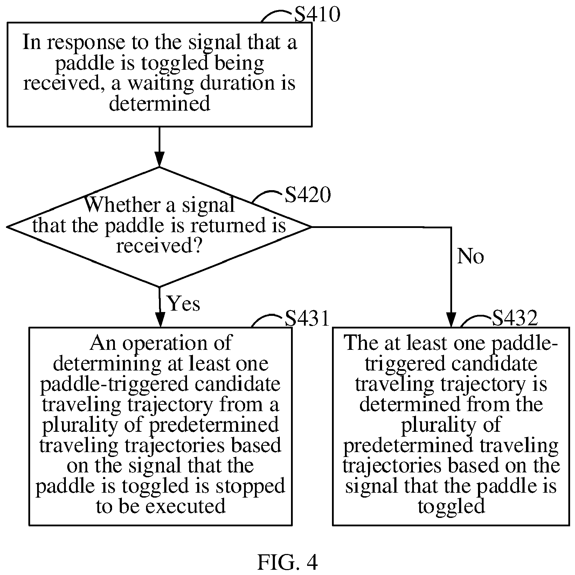

FIG. 4 schematically shows a flowchart of determining a paddle-triggered candidate traveling trajectory according to another embodiment of the present disclosure.

As shown in FIG. 4, the operation S210 may include operations S410, S420, S431 and S432.

In operation S410, in response to the signal that a paddle is toggled being received, a waiting duration is determined, where the waiting duration is a duration between a current time instant and a receiving time instant of the signal that the paddle is toggled.

In operation S420, it may be determined whether a signal that the paddle is returned is received or not when the waiting duration is less than or equal to a predetermined duration.

In operation S431, in response to the signal that the paddle is returned being received when the waiting duration is less than or equal to the predetermined duration, an operation of determining at least one paddle-triggered candidate traveling trajectory from a plurality of predetermined traveling trajectories based on the signal that the paddle is toggled is stopped to be executed.

In operation S432, in response to the signal that the paddle is returned being not received when the waiting duration is less than or equal to the predetermined duration, the at least one paddle-triggered candidate traveling trajectory is determined from the plurality of predetermined traveling trajectories based on the signal that the paddle is toggled.

According to embodiments of the present disclosure, when the signal that the paddle is toggled is received, it may be possible to wait for the predetermined duration, so that an operation of turning on a steering lamp in advance to give a prompt before changing a lane may be completed, so as to provide a sufficiently long prompt time for a rear vehicle.

According to embodiments of the present disclosure, the predetermined duration may be two seconds. However, the present disclosure is not limited to this. The predetermined duration may also be set according to an actual situation.

According to embodiments of the present disclosure, during a waiting period, if the signal that the paddle is returned is received, for example, if a road ahead is unblocked and there is no need to perform a driving behavior of changing a lane, then the operation of determining at least one paddle-triggered candidate traveling trajectory from the plurality of predetermined traveling trajectories based on the signal that the paddle is toggled may be stopped to be executed, and an operation of determining at least one auto-triggered candidate traveling trajectory from the plurality of predetermined traveling trajectories based on the predetermined screening rule may be executed.

According to embodiments of the present disclosure, during the waiting period, if the signal that the paddle is returned is not received, for example, if the vehicle is still in a trapped traffic scene, then the operation of determining at least one paddle-triggered candidate traveling trajectory from the plurality of predetermined traveling trajectories based on the signal that the paddle is toggled may be executed.

According to embodiments of the present disclosure, after receiving the signal that the paddle is toggled, a predetermined waiting duration may be set to match an actual traffic scene and a traffic rule, which may improve a safety of a vehicle traveling. In addition, the predetermined waiting duration may be set, so that after receiving the signal that the paddle is returned, the operation of determining at least one paddle-triggered candidate traveling trajectory from the plurality of predetermined traveling trajectories based on the signal that the paddle is toggled may be stopped to be executed, therefore ensuring that an optimal predetermined traveling trajectory is selected for traveling and may improve a rationality and a safety of the automatic driving.

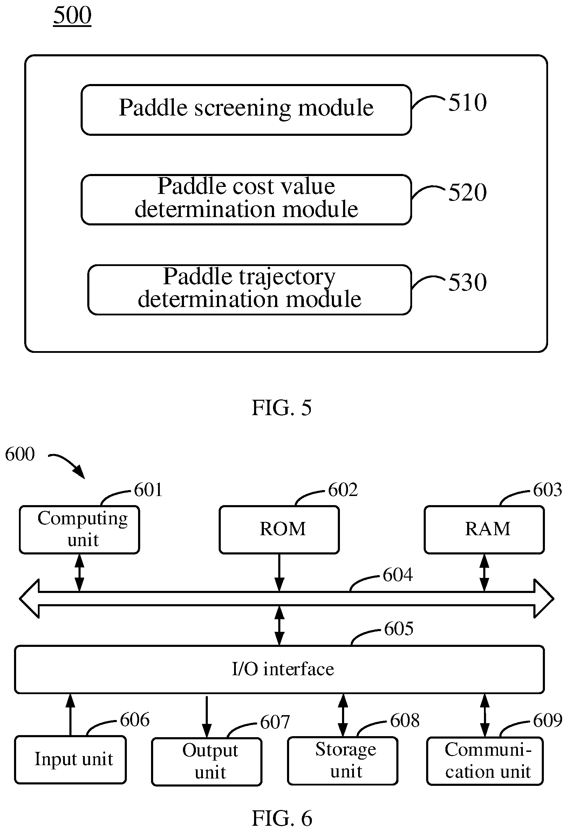

FIG. 5 schematically shows a block diagram of an apparatus of determining a traveling trajectory of a vehicle according to an embodiment of the present disclosure.

As shown in FIG. 5, an apparatus 500 of determining a traveling trajectory of a vehicle may include a paddle screening module 510, a paddle cost value determination module 520, and a paddle trajectory determination module 530.

The paddle screening module 510 is used to determine, in response to a signal that a paddle is toggled being received, at least one paddle-triggered candidate traveling trajectory from a plurality of predetermined traveling trajectories based on the signal that the paddle is toggled, where the signal that the paddle is toggled is used to indicate that the vehicle is in a lane-to-be-changed state, and the paddle-triggered candidate traveling trajectory includes a predetermined traveling trajectory for the vehicle to change a lane.

The paddle cost value determination module 520 is used to determine at least one paddle-triggered traveling trajectory cost value corresponding to the at least one paddle-triggered candidate traveling trajectory one by one.

The paddle trajectory determination module 530 is used to determine a paddle-triggered target traveling trajectory from the at least one paddle-triggered candidate traveling trajectory based on the at least one paddle-triggered traveling trajectory cost value, so that the vehicle travels according to the paddle-triggered target traveling trajectory.

According to embodiments of the present disclosure, the paddle screening module may include a duration determination unit, a paddle returning unit, and a paddle toggling unit.

The duration determination unit is used to determine a waiting duration in response to the signal that the paddle is toggled being received, where the waiting duration is a duration between a current time instant and a receiving time instant of the signal that the paddle is toggled.

The paddle returning unit is used to stop, in response to a signal that the paddle is returned being received when the waiting duration is less than or equal to a predetermined duration, executing an operation of determining at least one paddle-triggered candidate traveling trajectory from the plurality of predetermined traveling trajectories based on the signal that the paddle is toggled.

The paddle toggling unit is used to determine, in response to the signal that the paddle is returned being not received when the waiting duration is less than or equal to the predetermined duration, the at least one paddle-triggered candidate traveling trajectory from the plurality of predetermined traveling trajectories based on the signal that the paddle is toggled.

According to embodiments of the present disclosure, the apparatus of determining the traveling trajectory of a vehicle further includes an automatic screening module, an automatic cost value determination module, and an automatic trajectory determination module before the paddle screening module.

The automatic screening module is used to determine at least one auto-triggered candidate traveling trajectory from the plurality of predetermined traveling trajectories based on a predetermined screening rule.

The automatic cost value determination module is used to determine at least one auto-triggered traveling trajectory cost value corresponding to the at least one auto-triggered candidate traveling trajectory one by one.

The automatic trajectory determination module is used to determine the auto-triggered target traveling trajectory from the at least one auto-triggered candidate traveling trajectory based on the at least one auto-triggered traveling trajectory cost value.

According to embodiments of the present disclosure, the paddle screening module may include a paddle screening unit.

The paddle screening unit is used to determine, from the plurality of predetermined traveling trajectories, the predetermined traveling trajectory for the vehicle to change a lane and a predetermined traveling trajectory for maintaining a lane based on the signal that the paddle is toggled, as a plurality of paddle-triggered candidate traveling trajectories.

According to embodiments of the present disclosure, the automatic screening module may include an automatic screening unit.

The automatic screening unit is used to determine, from the plurality of predetermined traveling trajectories, a predetermined traveling trajectory for maintaining a lane and a predetermined traveling trajectory for bypassing an obstacle based on the predetermined screening rule, as a plurality of auto-triggered candidate traveling trajectories.

According to embodiments of the present disclosure, the paddle cost value determination module may include a paddle cost value determination unit.

The paddle cost value determination unit is used to determine, for each paddle-triggered candidate traveling trajectory of the at least one paddle-triggered candidate traveling trajectory, a paddle-triggered traveling trajectory cost value corresponding to the paddle-triggered candidate traveling trajectory based on an obstacle information, where the obstacle information includes a dynamic obstacle information and a static obstacle information.

According to embodiments of the present disclosure, the automatic cost value determination module may include an automatic cost value determination unit.

The automatic cost value determination unit is used to determine, for each auto-triggered candidate traveling trajectory of the at least one auto-triggered candidate traveling trajectory, an auto-triggered traveling trajectory cost value corresponding to the auto-triggered candidate traveling trajectory based on the obstacle information, a traveling speed information and a road information.

According to embodiments of the present disclosure, the auto-triggered traveling trajectory cost value includes at least one selected from: an original trajectory cost value, a bypass cost value, a collision cost value, a cross-solid-line cost value, a cross-multi-lane cost value, or a model cost value.

According to embodiments of the present disclosure, the paddle-triggered traveling trajectory cost value includes the collision cost value and/or the bypass cost value.

According to embodiments of the present disclosure, the present disclosure further provides an electronic device, a readable storage medium and a computer program product.

According to embodiments of the present disclosure, an electronic device is provided, including: at least one processor; and a memory communicatively connected to the at least one processor; where the memory stores instructions executable by the at least one processor, and the instructions, when executed by the at least one processor, are configured to cause the at least one processor to implement the method according to embodiments of the present disclosure.

According to embodiments of the present disclosure, a non-transitory computer-readable storage medium having computer instructions therein is provided, where the computer instructions are configured to cause a computer system to implement the method according to embodiments of the present disclosure.

According to embodiments of the present disclosure, a computer program product containing a computer program is provided, where the computer program, when executed by a processor, is configured to cause the processor to implement the method according to embodiments of the present disclosure.

According to embodiments of the present disclosure, a vehicle including the electronic device according to embodiments of the present disclosure is provided.

FIG. 6 shows a schematic block diagram of an exemplary electronic device 600 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and steps described above, such as the method of determining the traveling trajectory of a vehicle. For example, in some embodiments, the method of determining the traveling trajectory of a vehicle may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of determining the traveling trajectory of a vehicle described above. Alternatively, in other embodiments, the computing unit 601 may be configured to perform the method of determining the traveling trajectory of a vehicle by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

According to embodiments of the present disclosure, the present disclosure further provides a vehicle, which may include an electronic device, and may also include a CANBus module, a paddle, a Cybertron, etc.

According to embodiments of the present disclosure, when the paddle is toggled, the CANBUS module may synchronously obtain a signal that the paddle is toggled through a physical link, and transmit the signal to the electronic device through the Cybertron, so that the electronic device may perform the method of determining the traveling trajectory of the vehicle in response to a receipt of the signal that the paddle is toggled.

According to embodiments of the present disclosure, the electronic device may be integrated with the CANBUS module, the paddle, the Cybertron, etc., and may also be set separately with the CANBUS module, the paddle, the Cybertron, etc.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trajectoryball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A method of determining a traveling trajectory of a vehicle, comprising:

    determining (S210), in response to a signal that a paddle is toggled being received, at least one paddle-triggered candidate traveling trajectory from a plurality of predetermined traveling trajectories based on the signal that the paddle is toggled, wherein the signal that the paddle is toggled is configured to indicate that the vehicle is in a lane-to-be-changed state, and the paddle-triggered candidate traveling trajectory comprises a predetermined traveling trajectory for the vehicle to change a lane;

determining (S220) at least one paddle-triggered traveling trajectory cost value corresponding to the at least one paddle-triggered candidate traveling trajectory one by one; and

determining (S230), from the at least one paddle-triggered candidate traveling trajectory, a paddle-triggered target traveling trajectory based on the at least one paddle-triggered traveling trajectory cost value, so that the vehicle travels according to the paddle-triggered target traveling trajectory.

2.  The method according to claim 1, wherein the determining, in response to a signal that a paddle is toggled being received, at least one paddle-triggered candidate traveling trajectory from a plurality of predetermined traveling trajectories based on the signal that the paddle is toggled comprises:

    determining (S410) a waiting duration in response to the signal that the paddle is toggled being received, wherein the waiting duration is a duration between a current time instant and a receiving time instant of the signal that the paddle is toggled;

    in response to a signal that the paddle is returned being received when the waiting duration is less than or equal to a predetermined duration, stopping (S431) determining at least one paddle-triggered candidate traveling trajectory from the plurality of predetermined traveling trajectories based on the signal that the paddle is toggled; and

    in response to the signal that the paddle is returned being not received when the waiting duration is less than or equal to the predetermined duration, determining (S432) the at least one paddle-triggered candidate traveling trajectory from the plurality of predetermined traveling trajectories based on the signal that the paddle is toggled.

3.  The method according to claim 1 or 2, further comprising: before the determining, in response to a signal that a paddle is toggled being received, at least one paddle-triggered candidate traveling trajectory from a plurality of predetermined traveling trajectories based on the signal that the paddle is toggled,

    determining (S332), based on a predetermined screening rule, at least one auto-triggered candidate traveling trajectory from the plurality of predetermined traveling trajectories;

    determining (S342) at least one auto-triggered traveling trajectory cost value corresponding to the at least one auto-triggered candidate traveling trajectory one by one; and

    determining (S352) an auto-triggered target traveling trajectory from the at least one auto-triggered candidate traveling trajectory based on the at least one auto-triggered traveling trajectory cost value.

4.  The method according to claim 1, wherein the determining, in response to a signal that a paddle is toggled being received, at least one paddle-triggered candidate traveling trajectory from a plurality of predetermined traveling trajectories based on the signal that the paddle is toggled comprises:
    determining, from the plurality of predetermined traveling trajectories, the predetermined traveling trajectory for the vehicle to change a lane and a predetermined traveling trajectory for maintaining a lane based on the signal that the paddle is toggled, as a plurality of paddle-triggered candidate traveling trajectories.

5.  The method according to claim 3, wherein the determining at least one auto-triggered candidate traveling trajectory from the plurality of predetermined traveling trajectories based on a predetermined screening rule comprises:
    determining, from the plurality of predetermined traveling trajectories, a predetermined traveling trajectory for maintaining a lane and a predetermined traveling trajectory for bypassing an obstacle based on the predetermined screening rule, as a plurality of auto-triggered candidate traveling trajectories.

6.  The method according to claim 3, wherein the determining at least one paddle-triggered traveling trajectory cost value corresponding to the at least one paddle-triggered candidate traveling trajectory one by one comprises:
    determining, for each paddle-triggered candidate traveling trajectory of the at least one paddle-triggered candidate traveling trajectory, a paddle-triggered traveling trajectory cost value corresponding to the paddle-triggered candidate traveling trajectory based on an obstacle information, wherein the obstacle information comprises a dynamic obstacle information and a static obstacle information.

7.  The method according to claim 6, wherein the determining at least one auto-triggered traveling trajectory cost value corresponding to the at least one auto-triggered candidate traveling trajectory one by one comprises:

determining, for each auto-triggered candidate traveling trajectory of the at least one auto-triggered candidate traveling trajectory, an auto-triggered traveling trajectory cost value corresponding to the auto-triggered candidate traveling trajectory based on the obstacle information, a traveling speed information and a road information.

8. The method according to claim 7, wherein the auto-triggered traveling trajectory cost value comprises at least one selected from: an original trajectory cost value, a bypass cost value, a collision cost value, a cross-solid-line cost value, a cross-multi-lane cost value, or a model cost value; and
wherein the paddle-triggered traveling trajectory cost value comprises the collision cost value and/or the bypass cost value.

9. An apparatus (500) of determining a traveling trajectory of a vehicle, comprising:

a paddle screening module (510) configured to determine, in response to a signal that a paddle is toggled being received, at least one paddle-triggered candidate traveling trajectory from a plurality of predetermined traveling trajectories based on the signal that the paddle is toggled, wherein the signal that the paddle is toggled is configured to indicate that the vehicle is in a lane-to-be-changed state, and the paddle-triggered candidate traveling trajectory comprises a predetermined traveling trajectory for the vehicle to change a lane;
a paddle cost value determination module (520) configured to determine at least one paddle-triggered traveling trajectory cost value corresponding to the at least one paddle-triggered candidate traveling trajectory one by one; and
a paddle trajectory determination module (530) configured to determine a paddle-triggered target traveling trajectory from the at least one paddle-triggered candidate traveling trajectory based on the at least one paddle-triggered traveling trajectory cost value, so that the vehicle travels according to the paddle-triggered target traveling trajectory.

10. The apparatus (500) according to claim 9, wherein the paddle screening module (510) comprises:

a duration determining unit configured to determine a waiting duration in response to the signal that the paddle is toggled being received, wherein the waiting duration is a duration between a current time instant and a receiving time instant of the signal that that paddle is toggled;
a paddle returning unit configured to: in response to a signal that the paddle is returned being received when the waiting duration is less than or equal to a predetermined duration, stop determining at least one paddle-triggered candidate traveling trajectory from the plurality of predetermined traveling trajectories based on the signal that the paddle is toggled; and
a paddle toggling unit configured to: in response to the signal that the paddle is returned being not received when the waiting duration is less than or equal to the predetermined duration, determine the at least one paddle-triggered candidate traveling trajectory from the plurality of predetermined traveling trajectories based on the signal that the paddle is toggled.

11. The apparatus (500) according to claim 9 or 10, further comprising: before the paddle screening module (510),

an automatic screening module configured to determine, based on a predetermined screening rule, at least one auto-triggered candidate traveling trajectory from the plurality of predetermined traveling trajectories;
an automatic cost value determination module configured to determine at least one auto-triggered traveling trajectory cost value corresponding to the at least one auto-triggered candidate traveling trajectory one by one; and
an automatic trajectory determination module configured to determine an auto-triggered target traveling trajectory from the at least one auto-triggered candidate traveling trajectory based on the at least one auto-triggered traveling trajectory cost value.

12. The apparatus (500) according to claim 9, wherein the paddle screening module (510) comprises:
a paddle screening unit configured to determine, from the plurality of predetermined traveling trajectories, the predetermined traveling trajectory for the vehicle to change a lane and a predetermined traveling trajectory for maintaining a lane based on the signal that the paddle is toggled, as a plurality of paddle-triggered candidate traveling trajectories.

13. An electronic device (600), comprising:

at least one processor; and
a memory communicatively connected to the at least one processor, wherein
the memory stores instructions executable by the at least one processor, and the instructions, when executed by the at least one processor, are configured to cause the at least one processor to implement the method according to any one of claims 1 to 8.

14. A non-transitory computer-readable storage medium having computer instructions therein, wherein the computer instructions are configured to cause a computer system to implement the method according to any one of claims 1 to 8.

15. A computer program product containing a computer program, wherein the computer program, when executed by a processor, is configured to cause the processor to implement the method according to any one of claims 1 to 8.

100

101

FIG. 1A

101

Paddle ⌒1011

Physical
link

CANBus
module ⌒1012

Transmission
module ⌒1013

Decision-making
module ⌒1014

FIG. 1B

In response to a signal that a paddle is toggled being received, at least one paddle-triggered candidate traveling trajectory is determined from a plurality of predetermined traveling trajectories based on the signal that the paddle is toggled, where the signal that the paddle is toggled is used to indicate that the vehicle is in a lane-to-be-changed state, and the paddle-triggered candidate traveling trajectory includes a predetermined traveling trajectory for the vehicle to change a lane

S210

At least one paddle-triggered traveling trajectory cost value corresponding to the at least one paddle-triggered candidate traveling trajectory one by one is determined

S220

A paddle-triggered target traveling trajectory is determined from the at least one paddle-triggered candidate traveling trajectory based on the at least one paddle-triggered traveling trajectory cost value, so that the vehicle travels according to the paddle-triggered target traveling trajectory

S230

FIG. 2

A plurality of predetermined traveling trajectories are determined — S310

Whether a signal that a paddle is toggled is received? — S320

No

Yes

S331: At least one paddle-triggered candidate traveling trajectory is determined from the plurality of predetermined traveling trajectories based on the signal that the paddle is toggled

S332: At least one auto-triggered candidate traveling trajectory is determined from the plurality of predetermined traveling trajectories based on a predetermined screening rule

S341: At least one paddle-triggered traveling trajectory cost value corresponding to the at least one paddle-triggered candidate traveling trajectory one by one is determined

S342: At least one auto-triggered traveling trajectory cost value corresponding to the at least one auto-triggered candidate traveling trajectory one by one is determined

S351: A paddle-triggered target traveling trajectory is determined from the at least one paddle-triggered candidate traveling trajectory based on the at least one paddle-triggered traveling trajectory cost value

S352: An auto-triggered target traveling trajectory is determined from the at least one auto-triggered candidate traveling trajectory based on the at least one auto-triggered traveling trajectory cost value

FIG. 3

```
                                                  ⟋⟍S410
┌────────────────────────────────────────────────┐
│         In response to the signal that a         │
│            paddle is toggled being               │
│          received, a waiting duration is         │
│                  determined                      │
└────────────────────────────────────────────────┘
                        │
                        ▼
                  Whether a signal            ⟋⟍S420
            ◁  that the paddle is returned is  ▷─────────────────────┐
                     received?                                        │
                                                            No        │
                        │                                             │
                       Yes                                            │
              ⟋⟍S431                               ⟋⟍S432            │
┌──────────────────────────────┐    ┌──────────────────────────────┐ │
│     An operation of          │    │   The at least one paddle-   │◀┘
│  determining at least one    │    │    triggered candidate       │
│ paddle-triggered candidate   │    │   traveling trajectory is    │
│ traveling trajectory from a  │    │   determined from the        │
│ plurality of predetermined   │    │      plurality of            │
│ traveling trajectories based │    │ predetermined traveling      │
│    on the signal that the    │    │ trajectories based on the    │
│ paddle is toggled is stopped │    │ signal that the paddle is    │
│       to be executed         │    │          toggled             │
└──────────────────────────────┘    └──────────────────────────────┘
```

FIG. 4

500

Paddle screening module — 510

Paddle cost value
determination module — 520

Paddle trajectory
determination module — 530

FIG. 5

600

Computing
unit — 601

ROM — 602

RAM — 603

— 604

— 605

I/O interface

Input unit — 606

Output
unit — 607

Storage
unit — 608

Communi-
cation unit — 609

FIG. 6